Europäisches Patentamt

European Patent Office

Office européen des brevets

(11) Veröffentlichungsnummer: **0 269 922 B1**

(12) **EUROPÄISCHE PATENTSCHRIFT**

(45) Veröffentlichungstag der Patentschrift: **15.01.92**

(21) Anmeldenummer: **87116635.1**

(22) Anmeldetag: **11.11.87**

(51) Int. Cl.⁵: **C04B 35/64**, F27B 9/16, G21C 3/62

(54) **Verfahren und Ofen zum Sintern von Hochtemperaturkeramik.**

(30) Priorität: **03.12.86 DE 3641253**

(43) Veröffentlichungstag der Anmeldung:
**08.06.88 Patentblatt 88/23**

(45) Bekanntmachung des Hinweises auf die
Patenterteilung:
**15.01.92 Patentblatt 92/03**

(84) Benannte Vertragsstaaten:
**BE CH DE FR GB LI**

(56) Entgegenhaltungen:
**WO-A-84/02390**
**AT-A- 338 005**
**US-A- 2 271 091**

(73) Patentinhaber: **Nukem GmbH**
**Rodenbacher Chaussee 6 Postfach 11 00 80**
**W-6450 Hanau 11(DE)**

Patentinhaber: **SIEMENS AKTIENGESELL-**
**SCHAFT**
**Wittelsbacherplatz 2**
**W-8000 München 2(DE)**

(72) Erfinder: **Königs, Wilhelm, Dipl.-Ing.**
**Adolf-Reichwein-Strasse 8**
**W-6458 Rodenbach 1(DE)**
Erfinder: **Hrovat, Milan, Dipl.-Ing.**
**Meisenweg 7**
**W-6458 Rodenbach 2(DE)**

**Beschreibung**

Gegenstand der Erfindung ist ein Verfahren zum kontinuierlichen Sintern keramischer Formkörper in einem Ofen sowie ein Ofen zur Durchführung dieses Verfahrens.

Formkörper aus Hochtemperatur-Keramik, d.h. aus hochschmelzender Keramik die aus Oxiden Karbiden oder Nitriden beispielsweise der Elemente Uran, Plutonium, Gadolinium, Silizium, Titan, Niob, Zirkonium oder Molybdän durch Pressen hergestellt sind, werden durch Sintern bei hohen Temperaturen überwiegend oberhalb 1600°C, endverdichtet. Der Sinterprozeß erfolgt normalerweise durch Heißpressen in chargenweise betriebenen Öfen oder vorwiegend in kontinuierlich arbeitenden horizontalen Durchstoßsinteröfen. Diese Öfen sind elektrisch beheizt. Je nach dem Sintergut werden die Öfen als Vakuum-oder Schutzgasöfen verwendet. Das Sintergut selbst befindet sich in sogenannten Sinterbooten aus beispielsweise Wolfram, die über einen Antrieb linear durch den Ofen gestoßen werden.

Diese horizontalen Durchstoßsinteröfen haben verschiedene verfahrenstechnische und konstruktive Nachteile. Sie benötigen ein großes Ofenvolumen, was ein langes Aufheizen und Abkühlen bedingt. Außerdem benötigen sie einen großen Platzbedarf. Durch das Be- und Entladen der Sinterboote wird ein echter kontinuierlicher Betrieb der öfen verhindert.

Weiterhin müssen die Sinterboote mit dem Sintergut ebenfalls aufgeheizt und abgekühlt werden, was zusätzliche Energiekosten verursacht. Die erforderlichen zahlreichen Sinterboote bewirken außerdem eine hohe Kapitalbindung.

Die Erfindung lag daher die Aufgabe zugrunde, ein Verfahren zum kontinuierlichen Sintern keramischer Formkörper in einem Ofen zu entwickeln, das bei hohem Durchsatz wenig zeit-, energie- und platzaufwendig ist, sowie die Einsparung der teueren Sinterboote erlaubt.

Diese Aufgabe wurde enfindungsgemäß dadurch gelöst, daß die Formkörper auf der Wendelflange einer feststehenden, senkrecht angeordneten Wendel von den innenliegenden Längsrippen eines sich drehenden, senkrecht angeordneten Rohres, das die Wendel konzentrisch umschließt, vertikal durch den Ofen geführt werden und die Sinterzeit über die Drehgeschwindigkeit und/oder die Wendelgeometrie gesteuert wird.

Ein vorteilhafter Ofen zur Durchführung des erfindungsgemäßen Verfahrens enthält ein senkrecht angeordnetes drehbares, mit innenliegenden Längsrippen versehenes Rohr, in dem konzentrisch eine eng an den Längsrippen anliegende, feststehende Wendel angeordnet ist, wobei die Geometrie des Querschnittes der zwischen den Längsrippen des Rohres gebildeten Kanäle so ausgebildet und bemessen ist, daß sie gemeinsam mit der Breite der gegenüberliegenden Flanke der Wendel und deren Steigung dem Querschnitt der zugeführten Formkörper zuzüglich einem jeweils erforderlichen Führungsspiel entspricht.

Vorzugsweise enthält der Ofen oben eine Vereinzelungsvorrichtung für die Formkörper.

Weiterhin ist es vorteilhaft, wenn das Rohr und die Wendel auswechselbar sind.

Günstig ist es ferner wenn am unteren Ende des Ofens ein Abführkanal mit trichterartiger Einführung angeordnet ist, der den durch das untere Wendelende freigegebenen gesinterten Formkörper aufnimmt.

An Hand der schematischen Abbildungen I und II sollen das erfindungsgemäße verfahren sowie der Ofen zur Durchführung des Verfahrens näher erläutert werden.

Die zu sinternden Formkörper (3), z.B. kugelförmige, plattenförmige, zylindrische oder sonstwie gestaltete Formkörper geeigneter Geometrie aus hochschmelzenden-Keramik-Werkstoffen, wie Oxiden, Karbiden oder Nitriden, werden achsenorientiert geordnet über eine Formkörperzuführung (2) am oberen Ende einem senkrecht angeordneten Ofen (1) zugeführt. Die Formkörper (3) gelangen einzeln über eine automatische arbeitende Vereinzelungsvorrichtung (4) in Kanäle (8), die von den innenliegenden Längsrippen (7) eines drehbaren Rohres (6) gebildet werden. Das Rohr (6) wird über einen Antrieb (5) angetrieben. Abgestützt wird der jeweilige Formkörper (3) auf der Flanke (10) einer festehenden Wendel (9), die konzentrisch innerhalb des Rohres (6) positioniert ist. Die festehende Wendel (9) ist möglichst eng an den Längsrippen (7) angeordnet, d.h., es verbleibt lediglich ein geringer spaltartiger Zwischenraum, der für die einwandfreie Drehbewegung des Rohres (6) unter Berücksichtigung thermischer Ausdehnung und anderer Toleranzen ausreichend ist.

Die Geometrie des Querschnittes der zwischen den Längsrippen (7) gebildeten Kanäle (8) ist so ausgebildet und bemessen, daß sie gemeinsam mit der Breite der gegenüberliegenden korrespondierenden Flanke (10) der Wendel (9) und deren Steigung dem Querschnitt der Formkörper (3) zuzüglich einem erforderlichen Führungsspiel entspricht. Der jeweilige Formkörper (3) findet also den für die Ofenreise notwendigen Platz und wird dabei wirksam auf der Flanke (10) der Wendel (9) abgestützt, und im Zusammenwirken mit der Drehbewegung des Rohres (6) auf der Wendel (9) spiralförmig vertikal durch den Ofen und die zugeordneten Temperatur- und Sinterzonen geführt. Dabei wird die Drehbewegung des Rohres (6) über die Flanken der Längsrippen (7) auf den Formkörper (3) übertragen. Während des vertikalen spiralförmigen Durchgangs des jeweiligen Formkörpers (3) durch den Sinterofen wirken die eigene Schwerkraft Reibungskräfte sowie das über die Längsrippen (7) ausgeübte Drehmoment auf ihn ein Diese gemeinsame Einwirkung garantiert eine schonende Beförderung der Formkörper durch den Ofen, auch im zunächst noch nicht gesinterten Zustand, in dem also die Endeigenschaften der Formkörper (u.a. Enddichte, Porosität, Festigkeit, Enggeometrie) noch nicht erreicht sind. Während des gesamten Transportvorganges im Sinterofen durch das vorgegebene Temperaturprofil bleibt die Formkörperposition bezüglich der Ofenlängsachse erhalten. Die Sinterzeit und fallweise der Formkörperdurchsatz können unter die Drehgeschwindigkeit des Rohres (6) und/oder über die Geometrie der Wendel (9) in Abhängigkeit vom gewählten Temperaturprogramm in Zusammenwirken mit den Ofen-Heizkreisen und gegebenenfalls der Ofenatmosphäre gesteuert werden. Für den Wechsel der Geometrie der zu sinternden Formkörper ist es von Vorteil, Rohr (6) und Wendel (9) auswechselbar anzuordnen. Fallweise kann so durch andere Rippeneinteilung und andere Flankenbreite bzw. Steigung der Wendel (9) auf ein anderes Sinterprodukt umgestellt werden, ohne weitere Öfen zusätzlich vorhalten zu müssen.

Die gesinterten Formkörper (3) fallen beim Erreichen des Wendelendes aus dem Ofen (1). Dabei ist es vorteilhaft, wenn am unteren Ende des Ofens ein Abführkanal (11) angeordnet ist, der die herausfallenden Formkörper schonend und geordnet aufnimmt. Anschließend werden die gesinterten Formkörper der weiteren Behandlung (z.B. Schleifen, Qualitätskontrolle) und Verarbeitung zugeführt.

Erfolgt das Sintern in spezieller Gas-Atmosphäre (z.B. Argon, Wasserstoff), so erfolgt das Ein- und Ausschleusen der Formkörper über an sich bekannte Einrichtungen.

Die Vereinzelungsvorrichtung (4) wird mittels Antrieb (12) angetrieben und über Mitnehmer (13) mit dem Rohr (6) verbunden. Die Vereinzelungsvorrichtung kann so viele Durchführungen für die Formkörper aufweisen, wie Kanäle (8) innen am Rohr (6) vorhanden sind.

Der erfindungsgemäße Ofen kann auch als Temperofen verwendet werden, z.B. zur Nachbehandlung von Formkörpern geeigneter Geometrie nach dem sogenannten Heißschlagverdichten.

Das Rohr (6) und die Wendel (9) sind entsprechend den hohen Ofentemperaturen, die insbesonders in der Sinterzone oberhalb von 1600 °C liegen können, aus hochtemperaturfesten Materialien gefertigt.

Der Platzbedarf für den Ofen ist sehr gering. Bei hohen Durchsätzen werden nur geringe Energiemengen benötigt, die Ofenkapazität kann optimal genutzt werden.

Die folgenden Beispiele sollen das erfindungsgemäße Verfahren näher erläutern:

1. Zylindrische $UO_2$-Preßlinge mit 7,8 ± 0,1 mm Durchmesser, 10,5 ± 0,5 mm Länge und einer Preßdichte von 6 g/cm³ werden in einem Hochtemperaturofen (1) von 350 mm Breite, 350 mm Tiefe und 500 mm Höhe gemäß Abbildung I gesintert. Dazu werden Säulen von Preßlingen (3) mit einer Länge von 300 mm mit einem Prismenförderer in eine Doppelkammerschleuse transportiert, die über dem Ofen aufgebaut ist. Nachdem die Schleuse evakuiert und mit Ofengas (Ar/H₂ = 96/4) geflutet ist, werden die waagerecht gelagerten Preßlinge (3) in ein 38° zur Horizontalen geneigtes Rohr mit einem Durchmesser von 8 mm geschoben. Dabei rutschen die Preßlinge (3) einzeln und schonend in den senkrecht angeordneten Sinterofen (1) bis zur Vereinzelungsvorrichtung (4). Dort stauen sie sich wieder zu Säulen auf. Die Vereinzelungsvorrichtung (4) befindet sich oben im kalten Bereich des Hochtemperatursinterofens (1) und besteht aus einer sich drehenden Scheibe von 80 mm Durchmesser mit 8 um den Mittelpunkt der Scheibe konzentrisch angeordneten Bohrungen von 8,5 mm Durchmesser. Die Mittelpunkte der Bohrungen befinden sich 15 mm vom Mittelpunkt der Scheibe entfernt.

Der in der Vereinzelungsscheibe befindliche Preßling wird mit seinem halben Durchmesser auf der feststehenden Wendelflanke abgestützt. Das unterhalb der Vereinzelungsscheibe angeordnete Rohr (6) fluchtet mit seinen 8 Längskanälen (8) (Breite = 8,5 mm, Tiefe = 4 mm) exakt mit den Bohrungen in der Vereinzelungsscheibe, um ein Verklemmen der Preßlinge (3) zu verhindern. Während sich das Rohr (6) sowie die Vereinzelungsscheibe synchron drehen, rutscht der Preßling (3), abgestützt auf der Wendelflanke (10), durch den Hochtemperatursinterofen (1).

Durch die Längsrippen (7) zwischen den Kanälen (8) wird jeder Preßling (3) einzeln durch den Hochtemperaturofen (1) geschoben.

Die Steigung der Wendel (9) beträgt 15 mm, wobei 3 mm auf die Flankenhöhe und 12 mm auf den freien Abstand zwischen den einzelnen Flanken entfallen.

Die Wendel (9) aus Wolfram hat einen Kerndurchmesser von 22 mm sowie einen Außendurchmesser von 29,5 mm. Das Rohr (6), ebenfalls aus Wolfram, weist einen Innendurchmesser von 30 mm, einen Außendurchmesser von 44 mm sowie eine Kanaltiefe von 4 mm auf.

Zwischen Wendel (9) und Rohr (6) wurde ein freies Spiel von 0,5 mm vorgesehen, um eine direkte Reibung zwischen Wendel und Rohr zu vermeiden.

Das Temperaturprofil im Hochtemperatursinterofen (1) wird durch 6 Heizzonen so eingestellt, daß die Tabletten von Raumtemperatur auf 1500° C mit ca. 30° C/sec und von 1500° C auf 2200° C mit ca. 45° C/sec, bei einer Drehzahl von 7,5 min$^{-1}$ des Rohres, aufgeheizt werden.

Die Preßlinge bleiben ca. 30 sec in der Hochtemperaturzone von 2200° C und werden anschließend in die Abkühlzone transportiert.

Die auf Raumtemperatur abgekühlten Preßlinge werden anschließend in einen 38° zur Horizontalen geneigten Abführkanal (11) mit 8 mm Durchmesser überführt. Dies geschieht dadurch, daß die Wendelflanke vor dem Abführkanal (11) endet und die Preßlinge (3) ihre Abstützung verlieren. Während des Sintervorganges schrumpfen die Preßlinge von 7,8 mm Durchmesser auf 7,2 mm Durchmesser zu einer Dichte von ca. 10,4 g/cm$^3$. Während des gesamten Transportvorganges bleiben die Preßlinge mit ihrer Längsachse parallel zur Längsachse der Wendel bzw. Rohres fixiert.

Bei einer Drehzahl von 7,5 min$^{-1}$, d.h. 1 Preßl./sec, ergibt sich ein Tagesdurchsatz von ca. 75 kg UO$_2$-Preßlingen bei ca. 2,6 g/Preßling.
2. Aluminiumoxidkugeln mit 7,5 mm Durchmesser werden in einem Hochtemperatursinterofen gemäß Beispiel 1 gesintert.

Bei einer Drehzahl von 7,5 min und einer Verfügbarkeit on 80 % ergibt sich ein Tagesdurchsatz von ca.53,4 kg.
3. UO$_2$-Plättchen mit den Abmessungen 20 × 20 × 5 mm wurden in einem Ofen gemäß Abbildung I gesintert.

Die Wendel (9) besaß einen Kerndurchmesser von 50 mm einen Außendurchmesser von 58 mm. Die Steigung dieser Wendel betrug 25 mm. Davon entfielen 4 mm auf die Flankenhöhe von 21 mm auf den lichten Abstand zwischen den Flanken.

Das konzentrisch eingebaute Rohr (6) besaß 6 Längskanäle (8) für die Aufnahme und den Transport der UO$_2$-Plättchen.

Der Außendurchmesser des Rohres (6) betrug 76 mm, sein Innendurchmesser 58,5 mm. In das Rohr wurden 6 Längskanäle von 21 mm Breite und 3,5 mm Tiefe eingebracht.

Die Durchführung der Hochtemperatursinterung geschah analog Beispiel 1.

Bei einer Drehzahl von 7,5 min und bei gleicher Verfügbarkeit ergibt sich ein Tagesdurchsatz von 1653 kg.

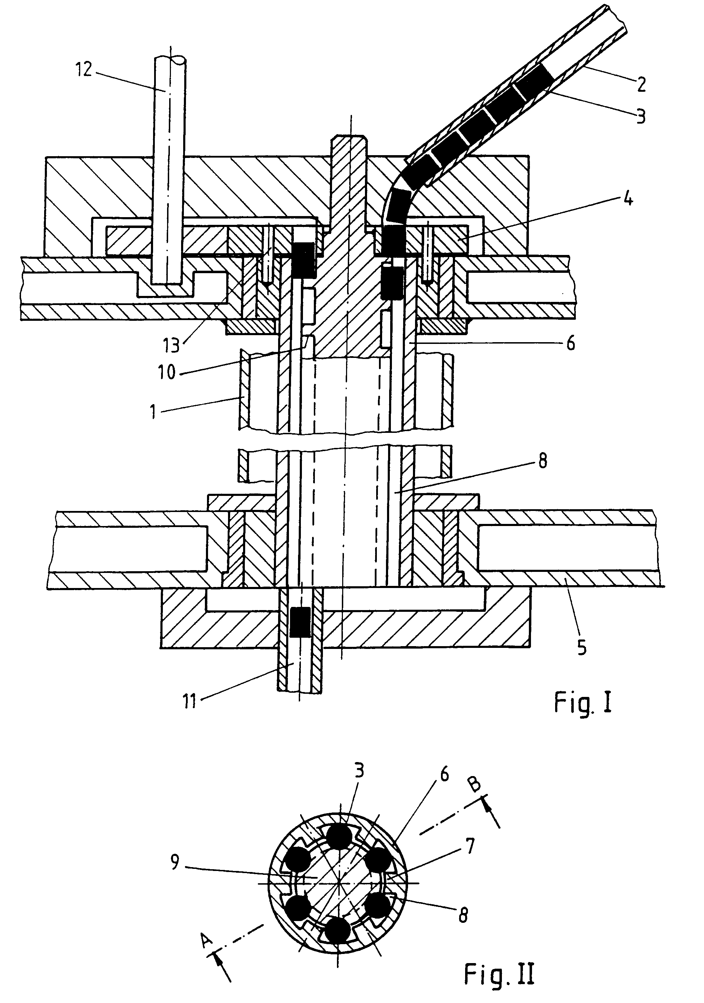

## Patentansprüche

1. Verfahren zum kontinuierlichen Sintern keramischer Formkörper in einem Ofen,
dadurch gekennzeichnet,
daß die Formkörper auf der Wendelflanke einer feststehenden, senkrecht angeordneten Wendel von den innenliegenden Längsrippen eines sich drehenden, senkrecht angeordneten Rohres, das die Wendel konzentrisch umschließt, vertikal durch den Ofen geführt werden und die Sinterzeit über die Drehgeschwindigkeit und/oder die Wendelgeometrie gesteuert wird.

2. Ofen zur Durchführung des Verfahrens gemäß Anspruch 1,
dadurch gekennzeichnet,
daß er ein senkrecht angeordnetes, drehbares, mit innenliegenden Längsrippen (7) versehenes Rohr (6) enthält, in dem konzentrisch eine eng an den Längsrippen (7) anliegende, feststehende Wendel (9) angeordnet ist, wobei die Geometrie des Querschnittes der zwischen den Längsrippen (7) des Rohres (6) gebildeten Kanäle (8) so ausgebildet und bemessen ist, daß sie gemeinsam mit der Breite der gegenüberliegenden Flanke (10) der Wendel (9) und deren Steigung dem Querschnitt der zugeführten Formkörper (3) zuzüglich einem jeweils erforderlichen Führungsspiel entspricht.

3. Ofen nach Anspruch 2,
dadurch gekennzeichnet,
daß er oben eine Vereinzelungsvorrichtung (4) für die Formkörper enthält.

4. Ofen nach den Ansprüchen 2 und 3,
dadurch gekennzeichnet,
daß das Rohr (6) und die Wendel (9) auswechselbar sind.

5. Ofen nach den Ansprüchen 2 bis 4,
dadurch gekennzeichnet,
daß an seinem unteren Ende ein Abführkanal (11) mit trichterartiger Einführung angeordnet ist, der die durch das untere Wendelende freigegebenen gesinterten Formkörper (3) aufnimmt.

## Claims

1. A process for the continuous sintering of ceramic mouldings in a furnace, characterized in that the mouldings are guided vertically through the furnace on the side of a fixed, vertically arranged spiral by the internal longitudinal ribs of a rotating, vertically arranged tube concentrically surrounding the spiral and in that the sintering time is controlled through the rotational speed and/or the geometry of the spiral.

2. A furnace for carrying out the process claimed in claim 1, characterized in that it contains a vertically arranged, rotatable tube (6) which is provided with internal longitudinal ribs (7) and in which is arranged a fixed spiral (9) closely adjoining the longitudinal ribs (7), the geometry of the cross-section of the channels formed between the longitudinal ribs (7) of the tube (6) being designed and dimensioned in such a way that, together with the width of the opposite side (10) of the spiral (9) and its pitch, it corresponds to the cross-section of the mouldings (3) introduced plus any necessary clearance for guiding.

3. A furnace as claimed in claim 2, characterized in that, at its upper end, it comprises a device (4) for separating the mouldings into individuals.

4. A furnace as claimed in claims 2 and 3, characterized in that the tube (6) and the spiral (9) are replaceable.

5. A furnace as claimed in claims 2 to 4, characterized in that arranged at its lower end is a discharge channel (11) with a funnel-like entry which receives the sintered mouldings released from the lower end of the spiral.

**Revendications**

1. Procédé pour le frittage en continu de corps moulés en céramique dans un four, caractérisé en ce que les corps moulés sont conduits sur les flancs de l'hélice d'une hélice disposée verticalement, fixé à partir des nervures situées à l'intérieur d'un tube disposé verticalement, rotatif qui entoure d'une manière concentrique l'hélice, verticalement à travers le four et que le temps de frittage est contrôlé par la vitesse de rotation et/ou la géométrie de l'hélice.

2. Four pour l'exécution du procédé selon la revendication 1, caractérisé en ce qu'il contient un tube 6 pourvu de nervures longitudinales (7) se situant à l'intérieur, rotatif, disposé verticalement dans lequel une hélice (9) fixée solidement est disposée d'une manière concentrique, ajustée d'une manière étroite aux nervures longitudinales (7), dans laquelle la géométrie de la section des canaux formés entre les nervures longitudinales (7) du tube (6) est conçue et dimensionnée de sorte qu'elle correspond d'une manière commune à la largeur des flancs opposés (10) de l'hélice (9) et à leur pente au diamètre transversal des corps moulés (3) ainsi guidés y compris un jeu de guidage nécessaire dans chaque cas.

3. Four selon la revendication 2, caractérisé en ce qu'il renferme un dispositif de séparation (4) pour les corps moulés.

4. Four selon les revendications 2 et 3, caractérisé en ce que le tube (6) et l'hélice (9) sont amovibles.

5. Four selon les revendications 2 à 4, caractérisé en ce qu'à son extrémité inférieure, un canal d'évacuation (11) est disposé avec une ouverture du type entonnoir, qui reçoit les corps moulés (3) frittés, libérés par l'extrémité inférieure de l'hélice.

Fig. I

Fig. II